# EUROPÄISCHE PATENTSCHRIFT

(11) **EP 0 776 492 B1**
(45) Veröffentlichungstag und Bekanntmachung des Hinweises auf die Patenterteilung: **26.03.2003**
(21) Anmeldenummer: 95929027.1
(22) Anmeldetag: 28.07.1995
(51) Int. Cl.: G02B 6/42, G02B 6/14

(54) **VORRICHTUNG ZUR ERZEUGUNG EINER MODENHOMOGENISIERTEN LASERSTRAHLUNG**
DEVICE FOR GENERATING A MODE-HOMOGENISED LASER BEAM
DISPOSITIF DE GENERATION D'UN FAISCEAU LASER HOMOGENEISE EN MODES

(30) Priorität: 18.08.1994 DE 4429193
(43) Veröffentlichungstag der Anmeldung: 04.06.1997
(73) Patentinhaber: Carl Zeiss Meditec AG, 07745 Jena (DE)
(72) Erfinder: FISCHER, Manfred, D-78532 Tuttlingen (DE); REINDL, Maximilian, D-90562 Heroldsberg (DE); SANDER, Jörn, D-33602 Bielefeld (DE); VOGLER, Klaus, D-90542 Eckental (DE)
(74) Vertreter: Hoeger, Stellrecht & Partner
(86) Internationale Anmeldenummer: EP9503006
(87) Internationale Veröffentlichungsnummer: WO96006374

(56) Entgegenhaltungen:
- WO-A-93/14432
- DE-A- 4 030 240
- US-A- 4 674 835
- US-A- 4 995 691
- LASER AND LIGHT OPHTALMOLOGY, Bd.5, Nr.4, 1993, AMSTERDAM/NEW-YORK Seiten 199 - 203 T.SEITER ET AL. 'FUNDAMENTAL MODE PHOTOABLATION OF THE CORNEA FOR MYOPIC CORRECTION' in der Anmeldung erwähnt
- DATABASE EPODOC CN-A-1067530 30 Dezember 1992 siehe Zusammenfassung
- PATENT ABSTRACTS OF JAPAN vol. 6, no. 198 (P-147) (1076) 7. Oktober 1982 & JP,A,57 108 816 (FUJITSU) 7. Juli 1982
- PATENT ABSTRACTS OF JAPAN vol. 9, no. 10 (E-290) (1733) 17. Januar 1985 & JP,A,59 159 568 (HITACHI SEISAKUSHO) 10. September 1984
- LASER FOCUS. INCL. V NO. 2450 ELECTRO-OPTICS, SINCE 1983, Bd.17, Nr.8, August 1981, TULSA US Seiten 103 - 105 D.L.FRANZEN ET AL. 'STANDARDIZING TEST CONDITIONS FOR CHARACTERIZING FIBERS'

## Beschreibung

Die vorliegende Erfindung betrifft eine Vorrichtung zur Erzeugung einer modenhomogenisierten Laserstrahlung, insbesondere zur Abtragung der Hornhaut eines Auges, mit einem gepulsten, im Multimodebetrieb arbeitenden Festkörperlaser, an den sich eine Übertragungsfaser aus einem für die Laserstrahlung durchlässigen Material anschließt.

Zur Photoablation von Gewebe, beispielsweise im Bereich der Hornhaut des Auges, ist es bekannt, Excimerlaser zu verwenden, deren rechteckiges Strahlprofil durch verschiedene zum Teil recht aufwendige Maßnahmen homogenisiert werden kann, beispielsweise durch Streuplatten und nachgeschaltete Blenden, durch die Verwendung abrasiver Blenden, durch Blendenwechselvorrichtungen für sukzessive Laserpulse oder durch Scannerverfahren mit veränderten Blendenöffnungen. Alle diese Maßnahmen sind apparativ außerordentlich aufwendig, eine ausreichende Homogenisierung des Strahlquerschnittes ist trotzdem nicht in allen Fällen zu erreichen.

Es ist auch bekannt, daß Photoablation an Gewebe, insbesondere an der Hornhaut, durch Festkörperlaser erreicht werden kann, beispielsweise durch einen Er:YAG-Laser (Theo Seiler und Josef Wollensak, in "Lasers and Light in Ophthalmology, Band 5, Nr. 4, Seiten 199 bis 203, 1993, Kugeler Publications, Amsterdam / New York). Dabei wird davon ausgegangen, daß ein solcher Laser eine räumlich homogene Strahlung im Grundmode TEMₒₒ ausstrahlt.

Tatsächlich ist dies jedoch keineswegs selbstverständlich, da ein Festkörperlaser in diesem Bereich ein Gemisch von Moden abstrahlt, so daß für den besonders geeigneten Basismode TEMₒₒ nur ein Teil der abgestrahlten Energie zur Verfügung steht. Abgesehen davon, daß sich dadurch eine unerwünschte räumliche Verteilung der Laserstrahlung ergibt, reichen dadurch auch die für die Hornhautablation notwendigen Energien im Basismode nicht aus.

Aus der Patentschrift US-A-4 681 396 ist ein Lasersystem bekannt, das zur Materialbearbeitung herangezogen wird, bei diesem Lasersystem kommt ein Festkörperlaser zum Einsatz, an den sich eine Übertragungsfaser aus einem für die Laserstrahlung durchlässigen Material anschließt. Mittels des Lasersystems kann sehr intensive Laserstrahlung auf das zu bearbeitende Material focusiert werden, beispielsweise zum Schweißen des Materials.

Aufgabe der vorliegenden Erfindung ist es, eine Vorrichtung der eingangs beschriebenen Art derart auszugestalten, daß mit relativ geringem apparativem Aufwand eine modenhomogenisierte Strahlung erzeugt werden kann, die besonders für die Anwendung in der Photoablation der Hornhaut geeignet ist.

Diese Aufgabe wird bei einer Vorrichtung der gattungsgemäßen Art erfindungsgemäß dadurch gelöst, daß der Festkörperlaser eine Emission in einem Wellenlängenbereich zwischen 2 und 3 µm aufweist, wobei die Pulsenergie zwischen 100 µJ und 1 J beträgt, daß die Übertragungsfaser eine Länge von mindestens 0,2 m und einen Durchmesser zwischen 50 und 1000 µm aufweist und an ihrem Ende gebrochen ist, und daß die Vorrichtung ein sich an die Übertragungsfaser anschließendes Endstück umfaßt mit planen, senkrecht zu seiner Längsachse angeordneten Endflächen aus einem im Wellenlängenbereich zwischen 2 µm und 3µm transparenten Material mit einer Länge zwischen 4 und 50 mm, wobei das Endstück aus einem Quarzstab, einer Quarzfaser aus Stufenprofil, einer Quarzfaser mit Gradientenprofil oder aus einer Saphirfaser oder einem anderen zwischen 2 um und 3 µm transparenten Kristall mit polierten Endflächen besteht.

Es hat sich überraschenderweise herausgestellt, daß die Strahlung eines Festkörperlasers, dem eine solche Übertragungsfaser einer Mindestlänge nachgeschaltet wird, in dieser Übertragungsfaser modenhomogenisiert wird.

Allerdings erfolgt eine radialsymmetrische Abstrahlung mit glocken- oder gaußförmiger Intensitätsverteilung durch eine solche Übertragungsfaser nur dann, wenn diese eine planparallele Endfläche aufweist. Dies ist bei den herkommucherweise verwendbaren Materialien sehr schwierig zu realisieren, häufig ergeben sich bei der Herstellung dieser Endflächen Störungen der Oberfläche, die bei Beaufschlagung mit Strahlung hoher Energie zu Schäden führen.

Es hat sich nun überraschenderweise herausgestellt, daß die Kombination einer solchen Übertragungsfaser, die keine exakt planparallele Endfläche auf weist, mit einem Endstück mit planen Endflächen aus Quarz oder Saphir, geeignet ist, diesen Nachteil auszugleichen. In dem Endstück erfolgt nämlich eine nochmalige räumliche Homogenisierung mit einem zusätzlichen Ausgleich von Unsymmetrien des Strahlprofils, das heißt Auswirkungen eines ungenau geformten Faserendes werden korrigiert, und es gelingt auf diese Weise, eine divergente, rotationssymmetrische Abstrahlung mit gaußförmiger Verteilung zu erzielen.

Dies ist insbesondere auch dann möglich, wenn die Übertragungsfaser an ihrem Ende gebrochen ist. Eine solche Bruchfläche weist keine Mikrostörungen auf, die eine Zerstörung bei Beaufschlagung mit Strahlung hervorrufen könnten, andererseits ist die abgegebene Strahlung jedoch nicht räumlich homogenisiert.

Durch diese Kombination einer Faser und eines Endstückes ergibt sich in der Faser also eine Modenhomogenisierung und im Endstück eine räumliche Homogenisierung, insgesamt erhält man auf diese Weise eine Strahlung mit einem rotationssymmetrischen Profil, wobei dieses Profil durch verschiedene Parameter noch geändert werden kann, beispielsweise durch die Variation der Länge der Übertragungsfaser, des Einkoppelwinkels und der Einkoppelrichtung der Strahlung beim Eintritt in die Übertragungsfaser, durch die Faserbiegung oder durch die numerische Apertur der Faser. Damit gelingt es, die vom Laser abgestrahlten Modengemische in vollem Umfange auszunützen zur Erzeugung eines homogenisierten, radialsymmetrischen Strahlprofils, beispielsweise eines gauß'sehen Strahlprofils, eines parabolischen Strahlprofils oder eines ringförmigen Strahlprofils. In jedem Fall weist diese radialsymmetrische Verteilung einen glatten Intensitätsverlauf auf, und es gibt keine drastische Verringerung der Ausgangsenergie des Lasers durch Erzwingen des Basismodes TEMₒₒ, wie dies bei anderen Laseranordnungen unvermeidbar ist.

Die größere Gesamtenergie ermöglicht die Verwendung größerer Strahldurchmesser und erleichtert die Variation des Strahldurchmessers. Dadurch wird diese Strahlung besonders geeignet für die Photoablation der Hornhaut, beispielsweise für die photoablative, refraktive Keratektomie zur Behandlung der Myopie.

Der Festkörperlaser kann beispielsweise einer der folgenden Laser sein:
Er:YLF
Er:YAP
Er:YSGG
Er:YAG
Ho:YAG
Cr:Er:YSGG

Die Übertragungsfaser kann aus ZrF₄ bestehen, aus einem Saphireinkristall, aus Quarz oder anderen im Wellenlängenbereich von 2 µm bis 3 µm transparenten Fasern (zum Beispiel Silberhalogenidfasern oder Chalcogenidfasern).

Erfindungsgemäß kann vorgesehen sein, daß das Endstück aus einem Quarzstab besteht.

Möglich ist auch die Verwendung einer Quarzfaser mit Stufenprofil oder mit Gradientenprofil.

Das Endstück kann außerdem auch durch eine Saphirfaser oder einem anderen zwischen 2 µm und 3 µm transparenten Kristall mit polierten Endflächen gebildet werden.

Es ist günstig, wenn der Abstand zwischen Übertragungsfaser und Endstück zwischen 0 und 20 mm liegt.

Die Länge der Laserpulse des Lasers kann zwischen 50 µs und 3 ms liegen. Die Vorrichtung ist jedoch auch für Q-switch-Impulse mit Pulslängen von zum Beispiel 10 ns bis 1 µs geeignet.

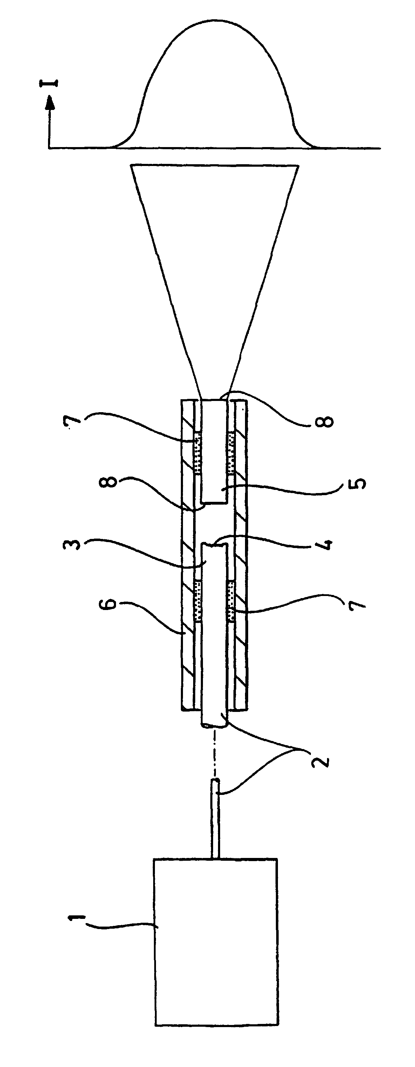

Die nachfolgende Beschreibung einer bevorzugten Ausführungsform der Erfindung dient im Zusammenhang mit der Zeichnung der näheren Erläuterung. Die Zeichnung zeigt schematisch eine Vorrichtung zur Erzeugung einer modenhomogenisierten Laserstrahlung.

Diese Vorrichtung umfaßt einen Festkörperlaser 1 an sich bekannter Bauart, der daher nicht näher erläutert ist. Es kann sich dabei beispielsweise um einen der folgenden Laser handeln:
Er:YLF
Er:YAP
Er:YSGG
Er:YAG
Ho:YAG
CR:Er:YSGG
Ho:YAG
oder um ähnliche im nahen Infrarot emittierende Kristalle handeln, wie zum Beispiel
Cr:Tm:Er:YAG
Er:GGG.

Die aus diesem austretende Strahlung tritt in eine Übertragungsfaser 2 ein, dabei handelt es sich um eine Faser einer Länge von mindestens 0,2 m mit einem Außendurchmesser zwischen 50 und 1000 µm. Die Übertragungsfaser 2 besteht beispielsweise aus ZrF₄ oder einem anderen Material, das für die abgegebene Wellenlänge des Festkörperlasers 1 durchlässig ist. Diese Wellenlänge liegt bei den angegebenen Substanzen zwischen 2 und 3 µm.

Am freien Ende 3 endet die Übertragungsfaser 2 in einer Bruchfläche 4, an diese schließt sich mit einem Abstand zwischen 0 und 20 mm ein Endstück 5 an, beispielsweise ein Quarzstab mit einer Länge zwischen 5 und 50 mm.

Das freie Ende 3 der Übertragungsfaser 2 und das Endstück 5 sind gemeinsam in einer Hülse 6 aus Metall gehalten, beispielsweise mit Hilfe eines Klebstoffes 7.

Die Stirnseiten 8 des Endstückes 5 sind plan ausgeführt, beispielsweise durch Polieren, sie stehen senkrecht auf der Längsachse des Endstückes 5.

Die von dieser Vorrichtung erzeugte Laserstrahlung wird divergent abgegeben und weist eine rotationssymmetrische Strahlungsverteilung auf, die modenhomogenisiert ist. Beispielsweise kann die Intensitätsverteilung über den Querschnitt, die in der Zeichnung anhand eines Beispieles angegeben ist, eine gauß'sche Verteilung sein, eine supergauß'sche, eine parabolische oder auch eine ringförmige. Dies hängt unter anderem von der Länge der Übertragungsfaser, vom Eintrittswinkel in die Übertragungsfaser und auch von der Biegung der Übertragungsfaser ab.

So ist es beispielsweise möglich, bei azentrischem Eintritt der Strahlung in die Übertragungsfaser eine Ringverteilung zu erzeugen, durch eine Biegung der Übertragungsfaser läßt sich eine asymmetrische Ausstrahlung erzielen, beispielsweise in Form einer halbmondförmigen Verteilung.

Üblicherweise wird die Einführung der Strahlung zentrisch erfolgen, so daß dann auch eine homogenisierte Verteilung mit Rotationssymmetrie zu erwarten ist.

Die auf diese Weise erzeugte Strahlung ist besonders geeignet zur Photoablation der Cornea, insbesondere zur Korrektur der Myopie. In den Randbereichen, die unterhalb einer bestimmten Schwellenergie liegen, erfolgt keine Ablation, diese Ablation setzt erst dort ein, wo die Energie der Strahlung einen bestimmten Schwellwert übersteigt. Durch den geglätteten Verlauf über den Querschnitt erhält man somit eine genau vorhersagbare Verteilung der Strahlung und kann diese Verteilung durch Mehrfachbelichtung so berücksichtigen, daß insgesamt eine im wesentlichen gleichmäßige beziehungsweise dem gewünschten Profil entsprechende Ablation erreicht wird.

## Patentansprüche

1. Vorrichtung zur Erzeugung einer modenhomogenisierten Laserstrahlung, insbesondere zur Abtragung der Hornhaut eines Auges, mit einem gepulsten, im Multimodebetrieb arbeitenden Festkörperlaser (1), an den sich eine Übertragungsfaser (2) aus einem für die Laserstrahlung durchlässigen Material anschließt, **dadurch gekennzeichnet, daß** der Festkörperlaser (1) eine Emission in einem Wellenlängenbereich zwischen 2 und 3 µm aufweist, wobei die Pulsenergie zwischen 100 µJ und 1 J beträgt, daß die Übertragungsfaser (2) eine Länge von mindestens 0,2 m und einen Durchmesser zwischen 50 und 1000 µm aufweist und an ihrem Ende (3) gebrochen ist, und daß die Vorrichtung ein sich an die Übertragungsfaser (2) anschließendes Endstück (5) umfaßt mit planen, senkrecht zu seiner Längsachse angeordneten Endflächen (8) aus einem im Wellenlängenbereich zwischen 2 µm und 3 µm transparenten Material mit einer Länge zwischen 4 und 50 mm, wobei das Endstück (5) aus einem Quarzstab, einer Quarzfaser mit Stufenprofil, einer Quarzfaser mit Gradientenprofil oder aus einer Saphirfaser oder einem anderen zwischen 2 µm und 3 µm transparenten Kristall mit polierten Endflächen besteht.

2. Vorrichtung nach Anspruch 1, **dadurch gekennzeichnet, daß** der Festkörperlaser (1) einen mit Er: oder Ho: dotierten Kristall umfaßt.

3. Vorrichtung nach Anspruch 2, **dadurch gekennzeichnet, daß** der Festkörperlaser (1) ein Er:YLF-Laser ist.

4. Vorrichtung nach Anspruch 2, **dadurch gekennzeichnet, daß** der Festkörperlaser (1) ein Er:YAP-Laser ist.

5. Vorrichtung nach Anspruch 2, **dadurch gekennzeichnet, daß** der Festkörperlaser (1) ein Cr:Er:YSGG-Laser ist.

6. Vorrichtung nach Anspruch 2, **dadurch gekennzeichnet**, daB der Festkörperlaser (1) ein Er:YAG-Laser ist.

7. Vorrichtung nach Anspruch 2, **dadurch gekennzeichnet, daß** der Festkörperlaser (1) ein Ho:YAG-Laser ist.

8. Vorrichtung nach einem der voranstehenden Ansprüche, **dadurch gekennzeichnet, daß** die Übertragungsfaser (2) aus ZrF₄ besteht.

9. Vorrichtung nach einem der Ansprüche 1 bis 8, **dadurch gekennzeichnet, daß** die Übertragungsfaser (2) aus einem Saphireinkristall besteht.

10. Vorrichtung nach einem der voranstehenden Ansprüche, **dadurch gekennzeichnet, daß** der Abstand zwischen Übertragungsfaser (2) und Endstück (5) zwischen 0 und 20 mm liegt.

11. Vorrichtung nach einem der voranstehenden Ansprüche, **dadurch gekennzeichnet, daß** die Länge der Laserpulse zwischen 50 µs und 3 ms liegt.

12. Vorrichtung nach einem der Ansprüche 1 bis 10, **dadurch gekennzeichnet, daß** die Laserpulse Q-switch-Impulse mit einer Länge zwischen 10 ns und 1 µs sind.

## Claims

1. A device for generating a mode-homogenised laser beam, in particular for the removal of the cornea of an eye, comprising a pulsed solid-state laser (1) operating in multimode, which is followed by a transmission fibre (2) consisting of a material transmissive to the laser beam, **characterised in that** the solid-state laser (1) emits in a wavelength range between 2 µm and 3 µm, the pulse energy being between 100 µJ and 1 J, **in that** the transmission fibre (2) has a length of at least 0.2 m and a diameter of between 50 µm and 1000 µm and is broken at its end (3), and **in that** the device comprises an end piece (5) following the transmission fibre (2) and having flat end surfaces (8) arranged perpendicularly to its longitudinal axis and consisting of a material transparent in the wavelength range between 2 µm and 3 µm and of a length between 4 mm and 50 mm, the end piece (5) comprising a quartz rod, a step-index quartz fibre, a graded-index quartz fibre or a sapphire fibre or another crystal transparent between 2 µm and 3 µm and having polished end surfaces.

2. A device according to claim 1, **characterised in that** the solid-state laser (1) comprises an Er- or Ho-doped crystal.

3. A device according to claim 2, **characterised in that** the solid-state laser (1) is an Er:YLF laser.

4. A device according to claim 2, **characterised in that** the solid-state laser (1) is an Er:YAP laser.

5. A device according to claim 2, **characterised in that** the solid-state laser (1) is a Cr:Er:YSGG laser.

6. A device according to claim 2, **characterised in that** the solid-state laser (1) is an Er:YAG laser.

7. A device according to claim 2, **characterised in that** the solid-state laser (1) is a Ho:YAG laser.

8. A device according to any one of the preceding claims, **characterised in that** the transmission fibre (2) consists of ZrF₄.

9. A device according to any one of claims 1 to 8, **characterised in that** the transmission fibre (2) consists of a sapphire monocrystal.

10. A device according to any one of the preceding claims, **characterised in that** the distance between the transmission fibre (2) and the end piece (5) is between 0 mm and 20 mm.

11. A device according to any one of the preceding claims, **characterised in that** the length of the laser pulses is between 50 µs and 3 ms.

12. A device according to any one of claims 1 to 10, **characterised in that** the laser pulses are Q-switched pulses of a length between 10 ns and 1 µs.

## Revendications

1. Dispositif pour générer un faisceau laser à mode homogène, destiné en particulier à retirer la cornée d'un oeil, comportant un laser à corps solide (1) pulsé multimodal qui est suivi d'une fibre de transmission (2) constituée par un matériau transparent au faisceau laser, **caractérisé en ce que** le laser à corps solide (1) émet dans un domaine de longueurs d'onde compris entre 2 et 3 µm, l'énergie impulsionnelle étant comprise entre 100 µJ et 1 J, **en ce que** la fibre de transmission (2) a une longueur d'au moins 0,2 m et un diamètre compris entre 50 et 1 000 µm et est interrompue à son extrémité (3), et **en ce que** le dispositif comporte une pièce d'extrémité (5) suivant la fibre de transmission (2), et présentant des faces d'extrémité planes (8) disposées perpendiculairement à son axe longitudinal et constituées d'un matériau transparent dans le domaine des longueurs d'onde comprises entre 2 µm et 3 µm, avec une longueur comprise entre 4 et 50 mm, la pièce d'extrémité (5) se composant d'un barreau en quartz, d'une fibre en quartz avec un profil en gradins, d'une fibre en quartz avec un profil en gradient, ou d'une fibre en saphir ou d'un autre cristal transparent entre 2 µm et 3 µm avec des faces d'extrémité polies.

2. Dispositif selon la revendication 1, **caractérisé en ce que** le laser à corps solide (1) comporte un cristal dopé Er: ou Ho:.

3. Dispositif selon la revendication 2, **caractérisé en ce que** le laser à corps solide (1) est un laser Er:YLF.

4. Dispositif selon la revendication 2, **caractérisé en ce que** le laser à corps solide (1) est un laser Er:YAP.

5. Dispositif selon la revendication 2, **caractérisé en ce que** le laser à corps solide (1) est un laser Cr:Er:YSGG.

6. Dispositif selon la revendication 2, **caractérisé en ce que** le laser à corps solide (1) est un laser Er:YAG.

7. Dispositif selon là revendication 2, **caractérisé en ce que** le laser à corps solide (1) est un laser Ho:YAG.

8. Dispositif selon l'une des revendications précédentes, **caractérisé en ce que** la fibre de transmission (2) est en ZrF₄.

9. Dispositif selon l'une des revendications 1 à 8, **caractérisé en ce que** la fibre de transmission (2) est en saphir monocristallin.

10. Dispositif selon l'une des revendications précédentes, **caractérisé en ce que** la distance entre la fibre de transmission (2) et la pièce d'extrémité (5) est comprise entre 0 et 20 mm.

11. Dispositif selon l'une des revendications précédentes, **caractérisé en ce que** la durée de l'impulsion laser est comprise entre 50 µs et 3 ms.

12. Dispositif selon l'une des revendications 1 à 10, **caractérisé en ce que** les impulsions laser sont des impulsions déclenchées de durées comprises entre 10 ns et 1 µs.
